# EUROPÄISCHE PATENTSCHRIFT

(11) **EP 2 529 136 B1**
(45) Veröffentlichungstag und Bekanntmachung des Hinweises auf die Patenterteilung: **24.04.2013**
(21) Anmeldenummer: 11720411.5
(22) Anmeldetag: 27.04.2011
(51) Int. Cl.: F16K 5/06, F16K 11/087, F16K 11/18

(54) **ABSPERRHAHN FÜR DEN INSTALLATIONSBEREICH**
SHUT-OFF VALVE FOR THE INSTALLATION FIELD
ROBINET D'ARRÊT POUR LE DOMAINE DES INSTALLATIONS DE SECOND OEUVRE

(30) Priorität: 10.08.2010 DE 102010033952
(43) Veröffentlichungstag der Anmeldung: 05.12.2012
(73) Patentinhaber: Viega GmbH & Co. KG, 57439 Attendorn (DE)
(72) Erfinder: WINTERHOLLER, Arthur, 57439 Attendorn (DE)
(74) Vertreter: Cohausz & Florack
(86) Internationale Anmeldenummer: PCT/EP2011/056613
(87) Internationale Veröffentlichungsnummer: WO 2012/019790

(56) Entgegenhaltungen:
- EP-A1- 0 786 611
- WO-A1-2008/067603
- DE-A1- 2 655 861
- DE-A1- 3 033 240
- DE-A1-102008 018 507
- DE-U1- 7 917 036
- GB-A- 2 066 931

## Beschreibung

Die Erfindung betrifft einen Absperrhahn für den Installationsbereich zum Absperren einer von einem Fluid durchströmbaren Leitung mit einem Gehäuse, das mindestens zwei Anschlussstutzen aufweist, wobei ein Strömungsweg von einem der Anschlussstutzen durch das Gehäuse zu einem anderen der Anschlussstutzen definiert ist, mit einem in dem Gehäuse drehbar angeordneten Absperrkörper mit mindestens einem quer zum Strömungsweg verlaufenden Absperrabschnitt, wobei der Absperrkörper zwischen einer Schließstellung, in der der Strömungsweg vollständig blockiert ist, und einer Offenstellung, in der der Strömungsweg vollständig freigegeben ist, bewegbar ist, wobei der mindestens eine Absperrabschnitt in der Schließstellung den Strömungsweg zumindest teilweise zu einem der Anschlussstutzen hin blockiert, und mit einer drehbar im Gehäuse gelagerten Schaltwelle, die an ihrem einen Ende mit dem Absperrkörper drehfest verbunden ist, mit einer in der Schaltwelle, die als Hohlwelle ausgebildet ist, gelagerten Hohlspindel mit einer Einlassöffnung an ihrem zum Absperrkörper weisenden Ende, einer Auslassöffnung an ihrem vom Absperrkörper wegweisenden Ende und einem von der Einlassöffnung zur Auslassöffnung führenden Entleerkanal, wobei die Hohlspindel relativ zu der Schaltwelle von einer ersten Position, in der der Entleerkanal über die Einlassöffnung mit dem Strömungsweg in Fluidverbindung steht, in eine zweite Position, in der die Einlassöffnung verschlossen ist, verlagerbar ist. Ferner betrifft die Erfindung ein Verfahren zur Herstellung eines solchen Absperrhahns.

Ein Absperrhahn der zuvor genannten Art, insbesondere ein Kugel-, Zylinder-, Kegel- oder Konushahn, ist seit langem bekannt und wird in vielfältigen technischen Anwendungen in verschiedenen Baugrößen eingesetzt. Es sind zwei- und mehrkanalige Absperrhähne bekannt. Ein zweikanaliger, das heißt mit zwei Anschlussstutzen versehener Kugelhahn ist beispielsweise aus der DE 10 2008 018 507 A1 bekannt.

Das Gehäuse des Absperrhahns umfasst in der Regel zwei miteinander verbundene Gehäuseteile, wobei zu jeder Seite ein Anschlussstutzen zur Anbindung des Absperrhahns an die Leitung ausgebildet ist. Die Verbindung der Leitungsabschnitte an die Anschlussstutzen kann durch Anschrauben, Anschweißen oder Verpressen erfolgen.

Durch ein Betätigungselement, das beispielsweise mechanisch, elektrisch, pneumatisch, elektromagnetisch oder hydraulisch angetrieben sein kann, wird ein Absperrkörper innerhalb des Gehäuses des Absperrhahns senkrecht zum Strömungsweg gedreht. Der Absperrkörper verschließt in der Schließstellung des Absperrhahns den Strömungskanal auf folgende Weise. Die bisher bekannten Absperrkörper für jegliche Form von Absperrhähnen der zuvor beschrieben Art sind rotations- oder spiegelsymmetrisch zur Rotationsachse aufgebaut, so dass in der Schließstellung ein erster Absperrabschnitt des Absperrkörpers den Strömungsweg zu dem einen der Anschlussstutzen hin vollständig blockiert, während ein zweiter Absperrabschnitt, der dem ersten Absperrabschnitt in der Regel gegenüberliegt, den Strömungsweg zu dem anderen der Anschlussstutzen hin zumindest teilweise blockiert. "Zumindest teilweise" bedeutet, dass der zweite Absperrabschnitt, da der erste Absperrabschnitt den Strömungsweg bereits vollständig blockiert, den Strömungsweg nicht unbedingt vollständig blockieren muss, sondern diesen auch nur reduzieren kann. Letzteres ist beispielsweise dann der Fall, wenn der Absperrhahn über ein in die Schaltwelle integriertes Entleerventil verfügt, wie es beispielsweise aus der DE 79 17 036 U1 bekannt ist, bei dem im zweiten Absperrabschnitt eine parallel zum Strömungsweg verlaufende erste Entleerbohrung vorgesehen ist, die den Strömungsweg in der Schließstellung des Absperrhahns mit der Hauptbohrung des Absperrkörpers, die in der Offenstellung den Strömungsweg freigibt, verbindet, wobei die Hauptbohrung wiederum über eine zweite Entleerbohrung im Absperrkörper mit dem Innern der Schaltwelle in Fluidverbindung steht. Im Innern der Schaltwelle wird das Entleerventil von einer Hohlspindel gebildet, die in der Schaltwelle zwischen einer Position, in der das Hohlspindelinnere gegenüber der zweiten Entleerbohrung des Absperrkörpers und damit gegenüber dem Strömungsweg abgedichtet ist, und einer Position, in der das Hohlspindelinnere über die Entleerbohrungen im Absperrkörper mit dem Strömungsweg in Fluidverbindung steht, bewegbar ist. Das Vorhandensein der ersten Entleerbohrung im zweiten Absperrabschnitt führt dazu, dass der zweite Absperrabschnitt in diesem Fall den Strömungsweg zu dem jeweiligen Anschlussstutzen hin nicht vollständig, sondern nur teilweise blockiert. Da dieser Abschnitt aber dennoch dichtend am Gehäuse anliegt und den Strömungsweg zumindest reduziert, wird dieser auch im Sinne der Erfindung als Absperrabschnitt verstanden.

Bei dem Absperrhahn gemäß der DE 79 17 036 U1 handelt es sich um einen Konushahn mit einem konusförmigen bzw. kegelstumpfförmigen Absperrkörper. Durch das Anordnen des Entleerventils innerhalb der Schaltwelle hat dieser Absperrhahn gegenüber dem übrigen Stand der Technik den Vorteil, dass er geringere Abmessungen gegenüber dem Fall hat, bei dem das Entleerventil nicht in die Absperrmechanik integriert ist, sondern davon unabhängig beabstandet zu der Absperrmechanik in einem Bereich zwischen Absperrkörper und Anschlussstutzen vorgesehen ist. Die letzt genannte Einbausituation, die zwangsläufig relativ große Abmessungen des Gehäuses zur Folge hat, ist nach wie vor bei Kugelhähnen, die also einen Absperrkörper mit zumindest abschnittsweise kugelförmiger Oberfläche haben, die einzig bekannte Möglichkeit, auch eine Entleerfunktion zu realisieren.

Der zuvor beschriebene Konushahn mit Entleermöglichkeit über die Schaltwelle hat zwar relativ geringe Abmessungen, hat aber den Nachteil, dass eine vollständige Entleerung nicht möglich ist. Aufgrund der Form und des Verlaufs des Entleerweges, der über das Innere des Anschlussstutzens über die erste Entleerbohrung im Absperrkörper, dann die Hauptbohrung im Absperrkörper und schließlich über die zweite Entleerbohrung im Absperrkörper zum Entleerventil führt, bleiben immer Reste des Fluids im Absperrkörper und im Anschlussstutzen zurück. Ein sich in einem solchen sogenannten Totraum sammelndes Fluid hat zur Folge, dass dieses, in der Regel handelt es sich dabei um Wasser, gefrieren kann und die Funktion des Absperrhahns nicht mehr gegeben ist. Darüber hinaus kann das sogenannte Totwasser zu gesundheitlichen Problemen führen. Durch einen als sogenannten Begrenzungsstift ausgebildeten Anschlag, der im Boden der Absperrarmatur integriert ist, wird eine Durchflussrichtung definiert. Entleert werden kann nach der Absperrung nur in dieser einen Durchflussrichtung.

Es ist daher die Aufgabe der vorliegenden Erfindung, einen Absperrhahn der eingangs genannten Art, der also über ein Entleerventil verfügt, so weiterzubilden, dass dieser sowohl möglichst kleine Abmessungen als auch ein möglichst vollständiges Entleeren gewährleistet.

Die zuvor hergeleitete und aufgezeigte Aufgabe wird gemäß einer ersten Lehre der vorliegenden Erfindung bei einem Absperrhahn für den Installationsbereich zum Absperren einer von einem Fluid durchströmbaren Leitung mit einem Gehäuse, das mindestens zwei Anschlussstutzen aufweist, die insbesondere durch Verpressen mit der Leitung verbindbar sind, wobei ein Strömungsweg von einem der Anschlussstutzen durch das Gehäuse zu einem anderen der Anschlussstutzen definiert ist, mit einem in dem Gehäuse drehbar angeordneten Absperrkörper mit mindestens einem quer zum Strömungsweg verlaufenden Absperrabschnitt, wobei der Absperrkörper zwischen einer Schließstellung, in der der Strömungsweg vollständig blockiert ist, und einer Offenstellung, in der der Strömungsweg vollständig freigegeben ist, bewegbar ist, wobei der mindestens eine Absperrabschnitt in der Schließstellung den Strömungsweg zumindest teilweise zu einem der Anschlussstutzen hin blockiert, mit einer drehbar im Gehäuse gelagerten Schaltwelle, die an ihrem einen Ende mit dem Absperrkörper drehfest verbunden ist, und mit einer in der Schaltwelle, die als Hohlwelle ausgebildet ist, gelagerten Hohlspindel mit einer Einlassöffnung an ihrem zum Absperrkörper weisenden Ende, einer Auslassöffnung an ihrem vom Absperrkörper wegweisenden Ende und einem von der Einlassöffnung zur Auslassöffnung führenden Entleerkanal, wobei die Hohlspindel relativ zu der Schaltwelle von einer ersten Position, in der der Entleerkanal über die Einlassöffnung mit dem Strömungsweg in Fluidverbindung steht, in eine zweite Position, in der die Einlassöffnung verschlossen ist, verlagerbar ist, dadurch gelöst, dass der Absperrkörper nur einen einzigen Absperrabschnitt umfasst, wobei in der Schließstellung der Absperrkörper den Strömungsweg nur zu einem der Anschlussstutzen hin blockiert, dass der einzige Absperrabschnitt den Strömungsweg vollständig blockiert und dass der einzige Absperrabschnitt als Kugelsegment ausgebildet ist.

Indem der Absperrhahn erfindungsgemäß über einen Absperrkörper verfügt, der nur einen einzigen Absperrabschnitt umfasst, der in der Schließstellung den Strömungsweg vollständig und nur zu einem der Anschlussstutzen hin blockiert, also der Strömungsweg zu dem anderen Anschlussstutzen hin vollständig frei und damit unbeeinflusst bleibt, ist dieser Absperrhahn zur Aufnahme eines in die Schaltwelle integrierten Entleerventils optimal geeignet. Da ein Entleerventil durch eine in die Schaltwelle integrierte und dort bewegbare Hohlspindel realisiert ist, kann im Falle einer Entleerung, wenn sich der Absperrkörper in Schließstellung befindet, das Fluid ungehindert von dem unverschlossenen und weiterhin vollständig freigegebenen Anschlussstutzen über das Entleerventil abfließen. Im Unterschied zum Stand der Technik ist also erfindungsgemäß neben dem Absperrabschnitt, der den Strömungsweg zu einem der Anschlussstutzen hin vollständig blockiert, kein weiterer Absperrabschnitt vorgesehen, der den Strömungsweg zu dem anderen der Anschlussstutzen hin teilweise blockiert bzw. bis auf eine im Vergleich zum Querschnitt des Strömungswegs relativ kleine Entleerbohrung im Absperrkörper verengt. Während einer Entleerung kann also das Fluid nahezu ungehindert aus dem Innern des nicht versperrten Anschlussstutzens über ein Entleerventil abfließen, ohne dass das Fluid von Teilen des Absperrkörpers, die einen entsprechenden Totraum zur Folge haben, teilweise zurückgehalten wird. Ein weiterer Vorteil des Ausbildens des Absperrkörpers in einer Weise, dass nur noch ein einziger Absperrabschnitt den Strömungsweg blockiert, ist, dass das Gehäuse innenseitig zu dem Anschlussstutzen hin, der in der Schließstellung nicht versperrt ist, auch nicht für eine dichtende Anlage eines Absperrabschnitts bearbeitet sein muss. Durch die Ausbildung des Absperrabschnitts als Kugelsegment, insbesondere als Segment einer Hohlkugel, wird außerdem, neben einer optimalen Abdichtung des Strömungswegs in der Schließstellung, ein vollständiges Abfließen des Fluids während einer Entleerung noch unterstützt. Ein wie zuvor beschriebener Absperrhahn kann also weder einfrieren, noch führt dieser zu gesundheitlichen Problemen durch sich ansammelnde Keime etc. Gleichzeitig ist dieser Absperrhahn aber auch durch das Integrieren eines Entleerventils in die Absperrmechanik, nämlich in die Schaltwelle, relativ kompakt und hat entsprechend geringe Abmessungen. Der Absperrhahn bzw. das Entleerventil ist im Übrigen immer zugänglich, ohne dass der Absperrhahn von der Leitung abgebaut werden muss. Schließlich ist auch vorteilhaft, dass der Hahn unabhängig von der Durchflussrichtung einsetzbar ist.

Auch kann ein Thermometer in die Hohlspindel eingesetzt werden, wodurch aufgrund der thermischen Verbindung zwischen Hohlspindel, Schaltwelle und Gehäuse die Temperatur des Fluids ermittelt werden kann.

Erfindungsgemäß ist vorgesehen, dass eine in der Schaltwelle, die als Hohlwelle ausgebildet ist, gelagerte Hohlspindel mit einer Einlassöffnung an ihrem zum Absperrkörper weisenden Ende, einer Auslassöffnung an ihrem vom Absperrkörper wegweisenden Ende und einem von der Einlassöffnung zur Auslassöffnung führenden Entleerkanal, wobei die Hohlspindel relativ zu der Schaltwelle von einer ersten Position, in der der Entleerkanal über die Einlassöffnung mit dem Strömungsweg in Fluidverbindung steht, in eine zweite Position, in der die Einlassöffnung verschlossen ist, verlagerbar ist, wobei die Hohlspindel insbesondere von mindestens zwei drehbar miteinander verbundenen Spindelteilen gebildet wird. Auf diese Weise wird mit besonders einfachen Mitteln, ohne dass zusätzlicher Bauraum nötig ist, ein Entleerventil geschaffen.

Wie bereits zuvor angedeutet, kann der Absperrabschnitt des Absperrkörpers als Segment einer Hohlkugel bzw. Kugelschale ausgebildet sein. Grundsätzlich ist es aber auch denkbar, den Absperrabschnitt als Segment einer Vollkugel auszugestalten. Grundsätzlich muss aber gewährleistet sein, dass aufgrund des optimalen Abdichtverhaltens der einzige Absperrabschnitt als Kugelsegement ausgebildet ist, also eine kugelförmige äußere Oberfläche aufweist, mit anderen Worten der Absperrhahn also ein Kugelhahn ist.

Es ist denkbar, dass die Schaltwelle nur mit der der Schaltwelle zugewandten Oberseite des Absperrkörpers verbunden ist und insbesondere über nicht mehr als 10% ihrer Länge in den Absperrkörper hinein ragt. Dies unterstützt im Falle des Entleerens das optimale Abfließen des Fluids.

Gemäß einer weiteren Ausgestaltung des erfindungsgemäßen Absperrhahns weist der Absperrkörper einen ersten Verbindungsabschnitt auf, über den der Absperrabschnitt mit der Schaltwelle drehfest verbunden ist. Durch den Verbindungsabschnitt, beispielsweise in Form eines Steges, wird der Absperrabschnitt von der Schaltwelle beabstandet gehalten, was ebenfalls das Abfließen des Fluids beim Entleervorgang optimiert.

Gemäß noch einer weiteren Ausgestaltung des erfindungsgemäßen Absperrhahns ist der Absperrkörper an seiner von der Schaltwelle abgewandten Unterseite über ein Lagerelement drehbar mit dem Gehäuse verbunden, wobei das Lagerelement insbesondere ein mit dem Gehäuse innenseitig und/oder mit dem Absperrkörper verbundener Bolzen ist. Dabei kann der Absperrkörper einen zweiten Verbindungsabschnitt, insbesondere auch in Form eines Steges, aufweisen, über den der Absperrabschnitt mit dem Lagerelement drehfest verbunden ist. So wird der auf die erfindungsgemäße Weise geformte Absperrkörper optimal gehalten und findet in der Schließstellung eine optimal dichtende Anlage innenseitig am Gehäuse, um den Strömungsweg zu dem entsprechenden Anschlussstutzen hin zu blockieren.

Gemäß einer weiteren Ausgestaltung des erfindungsgemäßen Absperrhahns sind der Absperrabschnitt und der erste und/oder zweite Verbindungsabschnitt einstückig miteinander ausgeführt, das heißt aus einem Stück geformt. Auf diese Weise wird die Herstellung des Absperrhahns vereinfacht. Eine noch einfachere Herstellung kann dadurch erreicht werden, dass der erste Verbindungsabschnitt und der zweite Verbindungsabschnitt spiegelsymmetrisch zueinander ausgebildet sind.

Noch weiter kann die Herstellung dadurch vereinfacht werden, dass gemäß einer weiteren Ausgestaltung des erfindungsgemäßen Absperrhahns der Absperrkörper ein Blechumformteil ist, das insbesondere eine gleichmäßige Wandstärke hat. Indem ein Blechumformteil anstelle eines Vollkörpers, beispielsweise eines Segments einer Vollkugel, verwendet wird, entfällt der hohe Aufwand für die spanende Bearbeitung auf der Drehbank. Auch der mit der spanenden Bearbeitung verbundene hohe Materialverbrauch entfällt, da erfindungsgemäß zur Herstellung des Absperrkörpers nur noch aus einem Rohblech ein Blechteil, welches zumindest abschnittsweise dem späteren Absperrkörper entspricht, ausgestanzt und umgeformt wird.

Gemäß noch einer weiteren Ausgestaltung des erfindungsgemäßen Absperrhahns hat der Absperrkörper einen U-förmigen Querschnitt. Eine solche U-Form führt zu einer Minimierung von Kanten im Innern des Absperrkörpers, was das Abfließen des Fluids beim Entleeren unterstützt und das Risiko eines Ansammelns von Keimen verringert.

Es ist denkbar, dass mehr als 80%, bevorzugt mehr als 90%, besonders bevorzugt mehr als 95%, des Absperrkörpers auf einer Seite der Mittelachse bzw. Drehachse der Schaltwelle angeordnet sind. Entsprechend sind auf der anderen Seite der Mittelachse bzw. Drehachse der Schaltwelle weniger als 20%, bevorzugt weniger als 10%, besonders bevorzugt weniger als 5%, des Absperrkörpers vorgesehen. Da das Fluid beim Entleeren von dem unversperrten Anschlussstutzen zumindest bis zur Mittelachse bzw. Drehachse der Schaltwelle und von dort koaxial zur Schaltwellenachse strömt, wird durch die Anordnung des weitaus größten Teils des Absperrkörpers bzw. Absperrkörpermaterials auf einer Seite der Schaltwellenachse erreicht, dass möglichst wenig Material des Absperrkörpers in den Weg des beim Entleeren abströmenden Fluids ragt. Dies erleichtert das Abströmen weiter.

Gemäß wiederum einer weiteren Ausgestaltung des erfindungsgemäßen Absperrhahns weist das Gehäuse ein erstes Gehäuseteil, das einen der Anschlussstutzen enthält, und ein zweites Gehäuseteil auf, das einen anderen der Anschlussstutzen enthält, wobei die beiden Gehäuseteile unmittelbar oder über ein Zwischenstück miteinander verbunden sind. Dabei kann entweder das Zwischenstück oder eines der Gehäuseteile die Schaltwelle aufnehmen. Ein lediglich aus den zwei Gehäuseteilen zusammengesetztes Gehäuse ist besonders einfach aufgebaut und entsprechend einfach zu montieren. Ein dreiteiliges Gehäuse unter Verwendung eines Zwischenstücks eröffnet die Möglichkeit, dass zu beiden Seiten des Zwischenstücks, welches vorzugsweise die Schaltwelle aufnimmt, identische Gehäuseteile angesetzt werden können, was ebenfalls zu einer vereinfachten Herstellung führt. Auch kann im Bedarfsfall unter verschiedenen Gehäuseteilen gewählt werden. Beispielsweise können zwei Gehäuseteile gewählt werden, die beide jeweils eine dichtende Anlage des einzigen Absperrabschnitts des Absperrkörpers zulassen, so dass jeder der Anschlussstutzen durch den Absperrkörper unter Freilassen des jeweils anderen Anschlussstutzens blockiert werden kann, was wiederum die Möglichkeit schafft, wahlweise die Leitung auf der einen Seite des Absperrhahns oder die Leitung auf der anderen Seite des Absperrhahns zu entleeren. Grundsätzlich kann auch im Falle des Vorhandenseins eines Zwischenstücks nur ein daran angesetztes Gehäuseteil mit einer Möglichkeit zur dichtenden Anlage des Absperrkörpers ausgebildet sein, wohingegen das andere Gehäuseteil eine solche Anlagemöglichkeit nicht aufweist. Ein entsprechender Aufbau ist aber auch ohne Vorhandensein eines Zwischenstücks denkbar. Mit anderen Worten kann erfindungsgemäß vorgesehen sein, dass die beiden Gehäuseteile jeweils einen Anlageabschnitt zur dichtenden Anlage des Absperrabschnitts aufweisen und der Absperrkörper über die Schaltwelle um mindestens 180° von einer ersten Schließstellung, in der der Absperrabschnitt am Anlageabschnitt eines der Gehäuseteile anliegt, in eine zweite Schließstellung, in der der Absperrabschnitt am Anlageabschnitt des anderen der Gehäuseteile anliegt, drehbar ist.

Der erfindungsgemäße Kugelhahn, das heißt Absperrhahn mit einem Absperrkörper, der einen als Kugelsegment ausgebildeten Absperrabschnitt aufweist, ist mit einem Entleerventil in Form einer in der Schaltwelle gelagerten Hohlspindel versehen, wobei gemäß einer weiteren Ausgestaltung die Hohlspindel einen Abschnitt aufweist, der an dem vom Absperrkörper abgewandten Ende der Schaltwelle aus dieser hervorsteht. Dieser hervorstehende Abschnitt kann verschiedene Funktionen haben. So ist es denkbar, dass der Abschnitt mit umlaufenden, im Querschnitt insbesondere zahnförmigen Vorsprüngen versehen ist, wodurch auf einfache Weise die Möglichkeit zum Anschluss eines Schlauches an die Hohlspindel geschaffen wird. Auch kann an den hervorstehenden Abschnitt ein Sechskant angeformt sein, über den mittels eines Werkzeugs die Hohlspindel relativ zu der Schaltwelle gedreht werden kann. Ist die Hohlspindel mit einem Außengewinde und die Schaltwelle mit einem damit zusammenwirkenden Innengewinde ausgestattet, kann durch Drehung der Hohlspindel relativ zur Schaltwelle die Hohlspindel axial zur Schaltwelle verlagert werden, um dadurch die Entleeröffnung freizugeben oder zu verschließen.

Wie bereits erwähnt kann die Hohlspindel auch von mindestens zwei drehbar miteinander verbundenen Spindelteilen gebildet werden. Dies ist insbesondere dann von Vorteil, wenn an einem der Spindelteile ein Schlauch befestigt ist, so dass dann, wenn der andere Spindelteil relativ zur Schaltwelle gedreht wird, sich der mit dem Schlauch verbundene Spindelteil und entsprechend auch der Schlauch nicht mitdreht.

Gemäß noch einer weiteren Ausgestaltung des erfindungsgemäßen Absperrhahns ist ein Handgriff, darunter sind auch Handhebel oder Handräder zu verstehen, drehfest mit der Schaltwelle, insbesondere ihrem vom Absperrkörper wegweisenden Ende, verbunden. Ein solcher Handgriff erlaubt auf einfache Weise das Verdrehen der Schaltwelle zwischen einer Schließstellung und einer Offenstellung. Ein Handgriff hat aber auch noch den Vorteil, dass dieser die Schaltwelle und, falls vorhanden, einen aus der Schaltwelle hervorstehenden Abschnitt der Hohlspindel schützt. Dazu kann vorgesehen sein, dass der Handgriff den Abschnitt der Hohlspindel, der aus der Schaltwelle hervorsteht, radial umgibt. Ein noch besserer Schutz wird dadurch erreicht, dass der Handgriff eine abnehmbare Kappe aufweist, die die Schaltwelle und/oder die Hohlspindel in axialer Richtung abdeckt.

Wie zuvor beschrieben kann die Hohlspindel, beispielsweise über eine Gewindeverbindung, so in der Schaltwelle gelagert sein, dass die Hohlspindel in axialer Richtung relativ zur Schaltwelle verlagerbar ist. Dabei ist gemäß einer Ausgestaltung des Absperrhahns vorgesehen, dass die Hohlspindel von der zweiten Position, in der die Einlassöffnung verschlossen ist, in die erste Position, in der der Entleerkanal über die Einlassöffnung mit dem Strömungsweg in Fluidverbindung steht, in Richtung des Absperrkörpers bewegt wird. Zum Öffnen der Einlassöffnung der Hohlspindel wird die Hohlspindel also nicht wie im Stand der Technik aus dem Gehäuse heraus verlagert, sondern in dieses hinein, was weiter reduzierte Außenabmessungen des Absperrhahns ermöglicht.

Alle zuvor beschriebenen Ausgestaltungen eines Absperrhahns gemäß der ersten Lehre der vorliegenden Erfindung haben eine optimale Zugänglichkeit, da die Entleerung durch die Schaltwelle immer in Richtung des Bedieners zeigt bzw. erfolgt. Auch ist durch das Integrieren des Entleerventils in die Schaltwelle kein zusätzlicher Platzbedarf für ein separates Entleerventil im Gehäuse notwendig. Kugelsegmentförmige Absperrkörper haben gegenüber Vollkugeln keine Toträume bzw. Kanten, die beim Entleeren das Fluid zurückhalten und die Ansammlung von Keimen fördern.

Bei den vorangehenden Ausgestaltungen kann die Schaltwelle von oben in das Gehäuse montiert werden und durch einen Sprengring gegen Ausblasen gesichert werden. Beim Zusammenbau des Absperrhahns kann ferner ein um die Drehachse der Schaltwelle umlaufender Dichtring zwischen Schaltwellenaußenseite und Gehäuseinnenseite eingesetzt werden. Auch zwischen Hohlspindelaußenseite und Schaltwelleninnenseite können mindestens zwei Dichtringe, die um die Drehachse umlaufend angeordnet sind, eingesetzt werden, wobei ein Dichtring in axialer Richtung oberhalb der Einlassöffnung der Hohlspindel und der andere Dichtring in axialer Richtung unterhalb der Einlassöffnung vorgesehen wird. Ein weiterer Dichtring wird im Bereich des Anlageabschnitts im Gehäuseinnern zwischen der Außenseite des jeweiligen Absperrabschnitts und der Gehäuseinnenseite angeordnet. Einzelne oder alle Dichtringe können als O-Ringe ausgebildet sein.

Gemäß einer zweiten Lehre der vorliegenden Erfindung wird die Aufgabe bei einem Verfahren zur Herstellung eines wie zuvor definierten Absperrkörpers dadurch gelöst, dass die Schaltwelle und die Hohlspindel als bauliche Einheit vormontiert werden und zusammen in das Gehäuse eingesetzt werden. Zusätzlich umfasst die bauliche Einheit auch den Handgriff. Bevorzugt wird die bauliche Einheit durch Vormontieren von Hohlspindel, Schaltwelle, Handgriff, einen Sprengring und vorzugsweise alle Dichtringe, insbesondere O-Ringe, hergestellt. Die bauliche Einheit wird in das Gehäuse des Absperrhahns eingesetzt und mittels Sprengring gegen Ausblasen gesichert.

Das Entleeren erfolgt beispielsweise dadurch, dass der Absperrhahn bzw. der Absperrkörper zunächst in Schließstellung gebracht wird und anschließend, sofern vorhanden, die Kappe von dem insbesondere zweiteiligen Handgriff demontiert wird. Danach wird ein Schlauch auf das nach außen stehende Ende der Hohlspindel gesetzt. Anschließend wird von Hand oder mit einem Werkzeug die Hohlspindel relativ zu der Schaltwelle verdreht. Das Entleerventil wird dadurch geöffnet.

Für den Fall, dass der Absperrkörper falsch montiert wurde oder die andere Seite der Leitung entleert werden soll, kann der Handgriff zusammen mit der Kappe demontiert werden. Die Schaltwelle kann dann, beispielsweise mit einem Werkzeug, um 180° gedreht werden, um eine andere (Schließ-)Stellung zu erreichen. Anschließend kann der Handgriff wieder aufgesetzt werden. Durch eine spezielle, insbesondere asymmetrische, Außenkontur der Schaltwelle und eine korrespondierende Innenkontur des Handgriffs kann die Position des Handgriffs relativ zur Schaltwelle eindeutig festgelegt werden. Denkbar ist auch, auf dem Griff die Entleerrichtung, das heißt die Stellung des Absperrkörpers, darzustellen.

Es gibt nun eine Vielzahl von Möglichkeiten, den erfindungsgemäßen Absperrhahn auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1: ein erstes Ausführungsbeispiel eines Absperrhahns,
- Figuren 2a) und b): einen Entleervorgang mittels des Absperrhahns aus Fig. 1,
- Fig. 3: ein anderes Ausführungsbeispiel eines Absperrhahns,
- Fig. 4: einen Handgriff für einen Absperrhahn gemäß Fig. 1 oder Fig. 3,
- Fig. 5: eine Hohlspindel für einen Absperrhahn gemäß Fig. 1 oder Fig. 3,
- Fig. 6: eine Montageeinheit aus einer anderen Hohlspindel und einer Schaltwelle und
- Fig. 7: einen Temperaturmessvorgang bei einem Absperrhahn gemäß Fig. 1.

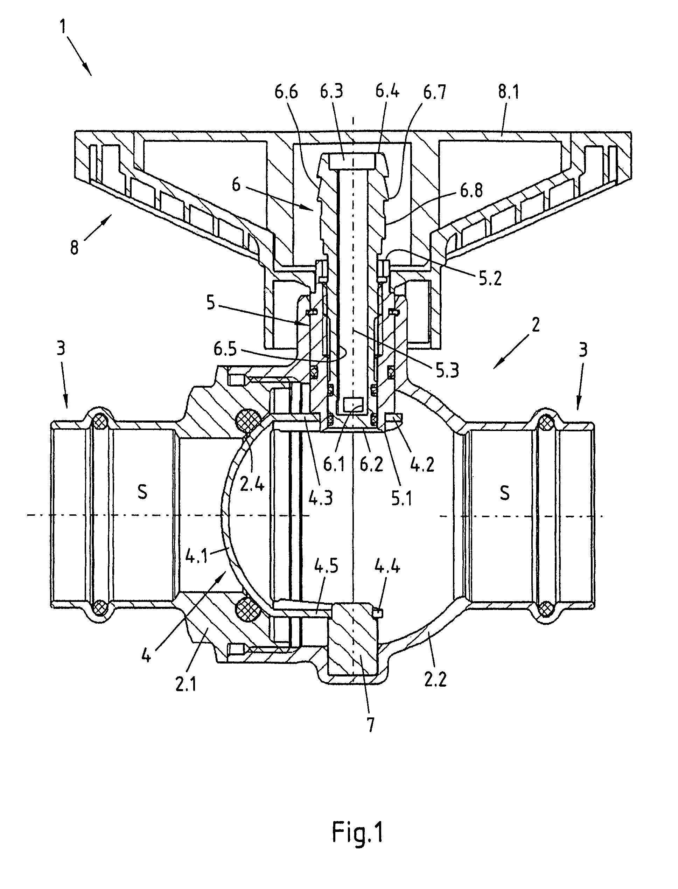

Fig. 1 zeigt im Schnitt einen Absperrhahn 1 für den Installationsbereich zum Absperren einer von einem Fluid durchströmbaren Leitung (nicht dargestellt). Der Absperrhahn 1 weist ein Gehäuse 2 aus einem ersten Gehäuseteil 2.1 und zweiten Gehäuseteil 2.2 auf, wobei das Gehäuse zwei Anschlussstutzen 3 aufweist, die durch Verpressen, insbesondere durch Kaltumformen mittels eines Presswerkzeugs, mit der Leitung verbindbar sind, wobei ein Strömungsweg S von einem der Anschlussstutzen 3 durch das Gehäuse 2 zu dem anderen der Anschlussstutzen 3 definiert ist.

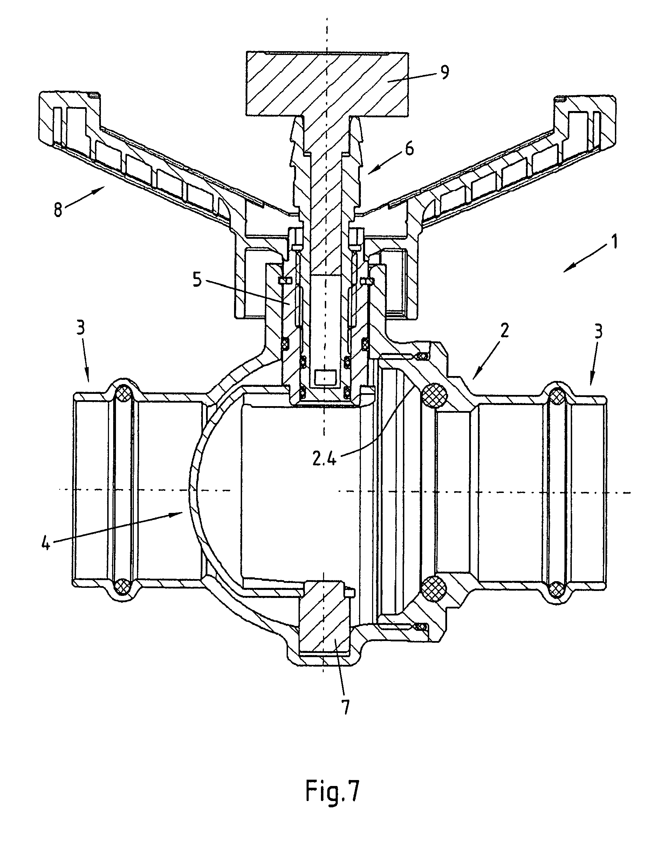

Im Gehäuse 2 ist ein Absperrkörper 4 drehbar angeordnet, der genau einen Absperrabschnitt 4.1 aufweist, der (in der Schließstellung) quer zum Strömungsweg S verläuft. Der Absperrkörper 4 ist zwischen der in Fig. 1 dargestellten Schließstellung und der in Fig. 7 dargestellten Offenstellung bewegbar. In der Schließstellung ist der Strömungsweg S vollständig blockiert. In der Offenstellung ist der Strömungsweg S vollständig freigegeben. Der Absperrkörper 4 weist eine Oberseite 4.2 und eine Unterseite 4.4 auf, wobei ein erster Verbindungsabschnitt 4.3 oberseitig an den Absperrabschnitt 4.1 und ein zweiter Verbindungsabschnitt 4.5 unterseitig an den Absperrabschnitt 4.1 angeformt ist.

Ferner ist eine Schaltwelle 5 mit einem unteren Ende 5.1 und einem oberen Ende 5.2 um eine Mittelachse bzw. Drehachse 5.3 drehbar im Gehäuse 2 bzw. zweiten Gehäuseteil 2.2 gelagert. Die Schaltwelle 5 ist an ihrem unteren Ende 5.1 mit dem Absperrkörper 4 drehfest verbunden.

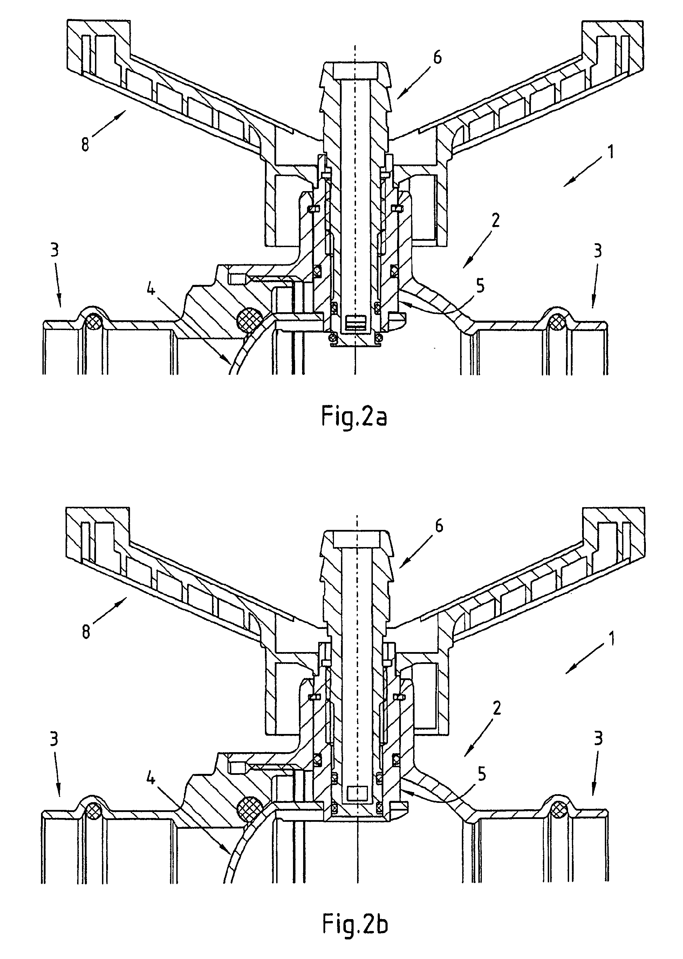

In der Schaltwelle 5, die hier als Hohlwelle ausgebildet ist, ist eine Hohlspindel 6 gelagert. Die Hohlspindel 6 weist eine Einlassöffnung 6.1 an ihrem unteren Ende 6.2, eine Auslassöffnung 6.3 an ihrem oberen Ende 6.4 und einen dazwischen liegenden Entleerkanal 6.5 auf. Die Hohlspindel 6 ist relativ zu der Schaltwelle 5 von einer ersten Position, in der der Entleerkanal 6.5 über die Einlassöffnung 6.1 mit dem Strömungsweg S, das heißt dem Innern des Gehäuses 2, in Fluidverbindung steht, und einer zweiten Position, in der die Einlassöffnung 6.1 verschlossen ist, verlagerbar. Die erste Position ist in Fig. 2a) dargestellt, die zweite Position ist in Fig. 2b) dargestellt. Die Verlagerung der Hohlspindel 6 innerhalb der Schaltwelle 5 erfolgt durch eine drehende und translatorische Bewegung.

Die Hohlspindel 6 weist einen aus der Schaltwelle 5 hervorstehenden Abschnitt 6.6 auf, der mit gezahnten umlaufenden Vorsprüngen 6.7 und einem Sechskant 6.8 versehen ist. Die Vorsprünge 6.7 erlauben den dichtenden Anschluss eines Schlauches. Der Sechskant 6.8 erlaubt die Anlage eines Werkzeugs zum Drehen der Hohlspindel 6.

Der Absperrkörper 4 ist abschnittsweise als Hohlkugel ausgebildet, und zwar derart, dass der einzige Absperrabschnitt 4.1 ein Kugelsegment bildet. Im Unterschied zum Stand der Technik ist der Absperrkörper 4 also nicht rotationssymmetrisch ausgebildet. Der Absperrabschnitt 4.1 des Absperrkörpers 4, der hier als Segment einer Hohlkugel ausgebildet ist, weist wie gesagt einen ersten Verbindungsabschnitt 4.3 und einen zweiten Verbindungsabschnitt 4.5 auf. Mit dem ersten Verbindungsabschnitt 4.3 ist der Absperrkörper 4 mit der Schaltwelle 5 und mit dem zweiten Verbindungsabschnitt 4.5 mit einem bolzenförmigen Lagerelement 7 verbunden. Die Schaltwelle 5 ist also nur mit der Oberseite 4.2 bzw. dem ersten Verbindungsabschnitt 4.3 des Absperrkörpers verbunden, wobei nicht mehr als 10% der Länge der Schaltwelle 5 in den Absperrkörper 4 hineinragen.

Der gesamte Absperrkörper 4 bestehend aus Absperrabschnitt 4.1, erstem Verbindungsabschnitt 4.3 und zweitem Verbindungsabschnitt 4.5 ist einstückig ausgebildet, und zwar durch ein Blechumformteil mit gleichmäßiger Wandstärke. Der Absperrkörper 4 hat einen U-förmigen Querschnitt, wobei mehr als 90% des Absperrkörpers 4, gemeint ist das Absperrkörpermaterial, auf der in Fig. 1 dargestellten linken Seite der Drehachse 5.3 angeordnet sind.

Zum Entleeren wird zunächst die Schaltwelle 5 in die in Fig. 1 dargestellte Position gedreht, die die Schließstellung bildet. Anschließend wird, wie in Fig. 2a) dargestellt, die Hohlspindel 6 relativ zur Schaltwelle 5 in Richtung des Innern des Gehäuses 2 verlagert, so dass das Fluid über die Einlassöffnung 6.1 der Hohlspindel 6 ausströmen kann. Nach dem Entleervorgang wird die Hohlspindel 6 relativ zur Schaltwelle 5 wieder in die andere Richtung verlagert und erreicht die in Fig. 2b) gezeigte Position.

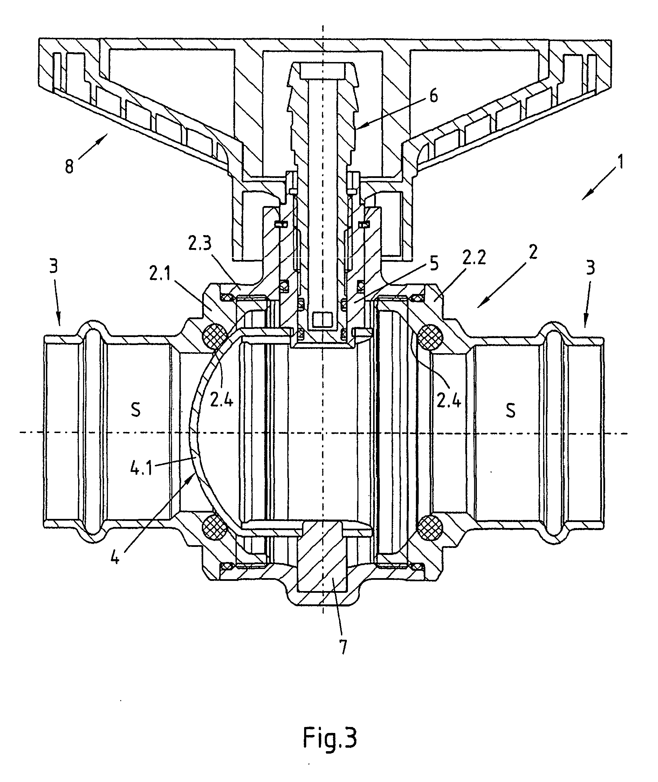

In den Figuren 1, 2a) und 2b) ist das Gehäuse 2 wie gesagt zweiteilig ausgebildet, weist also ein erstes Gehäuseteil 2.1 und ein zweites Gehäuseteil 2.2 auf. Alternativ kann, wie Fig. 3 zeigt, das Gehäuse auch dreiteilig ausgebildet sein und zusätzlich noch ein Zwischenstück 2.3 aufweisen. Im Falle der Fig. 3 ist das Gehäuse symmetrisch ausgebildet, so dass neben der in Fig. 3 gezeigten Schließstellung eine weitere Schließstellung nach einer Drehung des Absperrkörpers 4 um 180° erreicht wird. Hier hat also sowohl der erste Gehäuseteil 2.1 als auch der zweite Gehäuseteil 2.2 einen innenseitigen Anlageabschnitt 2.4 für den Absperrabschnitt 4.1 des Absperrkörpers 4.

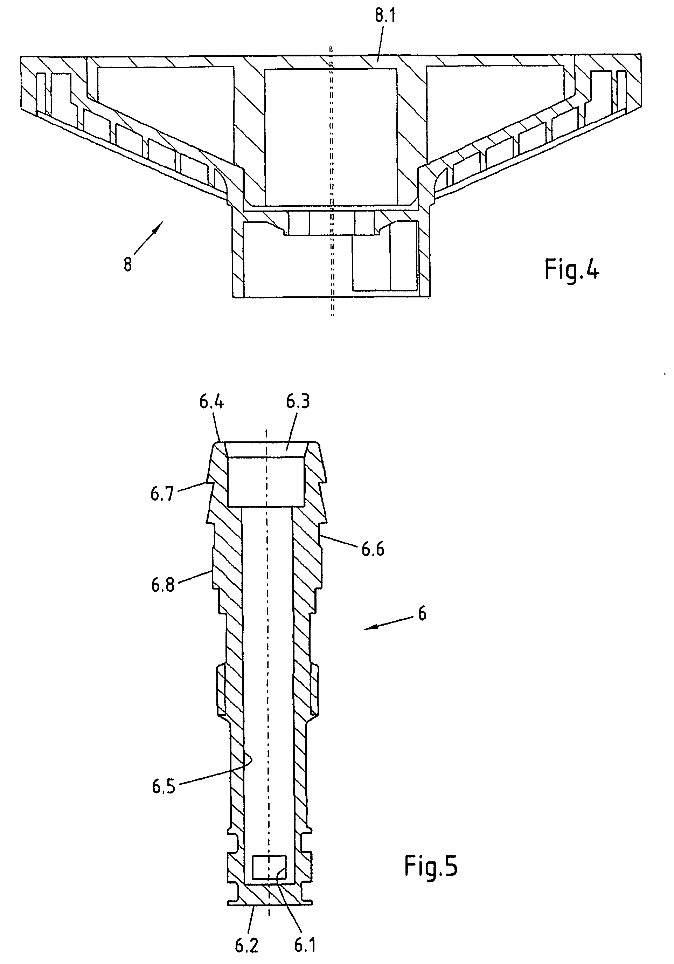

Wie bereits in den Figuren 2a) und b) zu erkennen war, wird zur Betätigung der Hohlspindel 6 eine Kappe 8.1, die Bestandteil des zweiteiligen Handgriffs 8 ist, abgenommen. Der Handgriff 8 ist im Detail in Fig. 4 dargestellt. Dabei ist der Handgriff 8, wie deutlich zu erkennen ist, innenseitig an eine besondere Außenkontur der Schaltwelle 5 angepasst, so dass der Handgriff 8 nur in einer bestimmten Stellung auf die Schaltwelle 5 passt. Der Handgriff 8 ist so geformt, dass, wie Fig. 1 und Fig. 3 zeigen, der aus der Schaltwelle 5 hervorstehende Abschnitt 6.6 der Hohlspindel 6 in radialer Richtung vom Handgriff 8 umgeben ist. In axialer Richtung ist der Abschnitt 6.6 der Hohlspindel 6 sowie die Schaltwelle 5 von der Kappe 8.1 abgedeckt.

Fig. 5 zeigt eine detaillierte Schnittansicht eines ersten Ausführungsbeispiels einer Hohlspindel 6, die in vorliegendem Fall einstückig ausgebildet ist. Die Hohlspindel 6 weist eine Einlassöffnung 6.1, eine Auslassöffnung 6.3 und einen dazwischen angeordneten Entleerkanal 6.5 auf. Ferner sind die bereits beschriebenen Vorsprünge 6.7 und der bereits beschriebene Sechskant 6.8 vorgesehen.

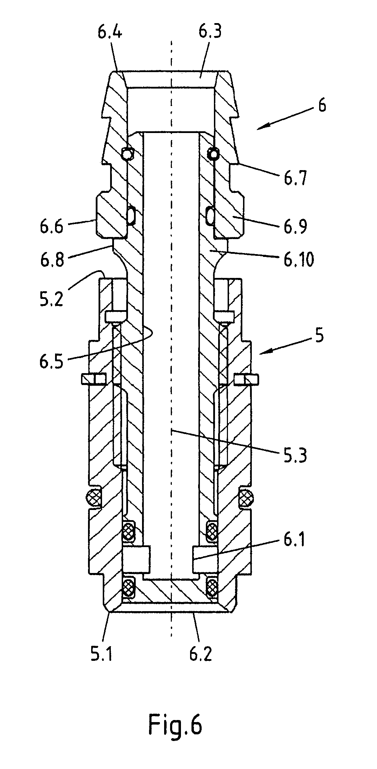

Im Unterschied zu Fig. 5 zeigt Fig. 6 eine zweiteilige Ausführung einer Hohlspindel 6, bei der nämlich ein Spindelteil 6.9 relativ zu einem weiteren Spindelteil 6.10 drehbar ist. Der Sechskant 6.8 ist dabei Bestandteil des Spindelteils 6.10 und die Vorsprünge 6.7 sind Bestandteil des dazu drehbaren Spindelteils 6.9. Wird die Hohlspindel 6 über ein am Sechskant 6.8 angreifendes Werkzeug gedreht, dreht sich ein auf die Vorsprünge 6.7 aufgesteckter Schlauch auf diese Weise nicht mit.

In Fig. 6 ist auch dargestellt, dass die Hohlspindel 6 und die Schaltwelle 5 zusammen als vormontierte Einheit zusammengesetzt worden sind. Diese Montageeinheit umfasst zusätzlich auch schon den in Fig. 4 gezeigten Handgriff 8. Grundsätzlich kann anstelle der zweiteiligen Hohlspindel 6 in der Montageeinheit selbstverständlich auch die einteilige Hohlspindel 6 aus Fig. 5 vorgesehen werden.

Fig. 7 zeigt schließlich eine Anwendungsmöglichkeit des Absperrhahns 1 zur Messung der Temperatur des Fluids. Hierzu ist, nachdem die Kappe 8.1 des Handgriffs 8 entfernt worden ist, ein Thermometer 9 von oben in die Hohlspindel 6 eingeführt worden. Für die Temperaturmessung befindet sich der Absperrkörper 4 in Offenstellung, so dass eine Durchströmung des Strömungswegs S gegeben ist. Die Temperatur des Fluids wird über das Gehäuse 2, die Schaltwelle 5 und die Hohlspindel 6 an das Thermometer 9 übertragen, da in diesem Ausführungsbeispiel alle Bauteile aus Metall bestehen.

## Patentansprüche

1. Absperrhahn (1) für den Installationsbereich zum Absperren einer von einem Fluid durchströmbaren Leitung
- mit einem Gehäuse (2), das mindestens zwei Anschlussstutzen (3) aufweist, wobei ein Strömungsweg (S) von einem der Anschlussstutzen (3) durch das Gehäuse (2) zu einem anderen der Anschlussstutzen (3) definiert ist,
- mit einem in dem Gehäuse (2) drehbar angeordneten Absperrkörper (4) mit mindestens einem quer zum Strömungsweg (S) verlaufenden Absperrabschnitt (4.1), wobei der Absperrkörper (4) zwischen einer Schließstellung, in der der Strömungsweg (S) vollständig blockiert ist, und einer Offenstellung, in der der Strömungsweg (S) vollständig freigegeben ist, bewegbar ist, wobei der mindestens eine Absperrabschnitt (4.1) in der Schließstellung den Strömungsweg (S) zumindest teilweise zu einem der Anschlussstutzen (3) hin blockiert, und
- mit einer drehbar im Gehäuse (2) gelagerten Schaltwelle (5), die an ihrem einen Ende (5.1) mit dem Absperrkörper (4) drehfest verbunden ist,
- mit einer in der Schaltwelle (5), die als Hohlwelle ausgebildet ist, gelagerten Hohlspindel (6) mit einer Einlassöffnung (6.1) an ihrem zum Absperrkörper (4) weisenden Ende (6.2), einer Auslassöffnung (6.3) an ihrem vom Absperrkörper (4) wegweisenden Ende (6.4) und einem von der Einlassöffnung (6.1) zur Auslassöffnung (6.3) führenden Entleerkanal (6.5), wobei die Hohlspindel (6) relativ zu der Schaltwelle (5) von einer ersten Position, in der der Entleerkanal (6.5) über die Einlassöffnung (6.1) mit dem Strömungsweg (S) in Fluidverbindung steht, in eine zweite Position, in der die Einlassöffnung (6.1) verschlossen ist, verlagerbar ist
**dadurch gekennzeichnet,**
- **dass** der Absperrkörper (4) nur einen einzigen Absperrabschnitt (4.1) umfasst, wobei in der Schließstellung der Absperrkörper (4) den Strömungsweg (S) nur zu einem der Anschlussstutzen (3) hin blockiert,
- **dass** der einzige Absperrabschnitt (4.1) den Strömungsweg (S) vollständig blockiert und
- **dass** der einzige Absperrabschnitt (4.1) als Kugelsegment ausgebildet ist.

2. Absperrhahn (1) nach Anspruch 1, **dadurch gekennzeichnet, dass** die Hohlspindel (6) von mindestens zwei drehbar miteinander verbundenen Spindelteilen (6.9,6.10) gebildet wird.

3. Absperrhahn (1) nach Anspruch 1 oder 2, **dadurch gekennzeichnet, dass** der Absperrabschnitt (4.1) als Segment einer Hohlkugel oder Vollkugel ausgebildet ist.

4. Absperrhahn (1) nach einem der vorangehenden Ansprüche, **dadurch gekennzeichnet, dass** der Absperrkörper (4) einen ersten Verbindungsabschnitt (4.3) aufweist, über den der Absperrabschnitt (4.1) mit der Schaltwelle (5) drehfest verbunden ist.

5. Absperrhahn (1) nach einem der vorangehenden Ansprüche,
**dadurch gekennzeichnet, dass** der Absperrkörper (4) an seiner von der Schaltwelle (5) abgewandten Unterseite (4.4) über ein Lagerelement (7) drehbar mit dem Gehäuse (2) verbunden ist, wobei das Lagerelement (7) insbesondere ein mit dem Gehäuse (2) innenseitig und/oder mit dem Absperrkörper (4) verbundener Bolzen ist, und wobei insbesondere der Absperrkörper (4) einen zweiten Verbindungsabschnitt (4.5) aufweist, über den der Absperrabschnitt (4.1) mit dem Lagerelement (7) drehfest verbunden ist.

6. Absperrhahn (1) nach einem der Ansprüche 4 oder 5,
**dadurch gekennzeichnet, dass** der Absperrabschnitt (4.1) und der erste und/oder zweite Verbindungsabschnitt (4.3,4.5) einstückig miteinander ausgeführt sind.

7. Absperrhahn (1) nach einem der vorangehenden Ansprüche,
**dadurch gekennzeichnet, dass** der Absperrkörper (4) ein Blechumformteil ist, das insbesondere eine gleichmäßige Wandstärke hat.

8. Absperrhahn (1) nach einem der vorangehenden Ansprüche,
**dadurch gekennzeichnet, dass** das Gehäuse (2) ein erstes Gehäuseteil (2.1), das einen der Anschlussstutzen (3) enthält, und ein zweites Gehäuseteil (2.2) aufweist, das einen anderen der Anschlussstutzen (3) enthält, wobei die beiden Gehäuseteile (2.1,2.2) unmittelbar oder über ein Zwischenstück (2.3) miteinander verbunden sind, und wobei insbesondere das Zwischenstück (2.3) oder eines der Gehäuseteile (2.1,2.2) die Schaltwelle (5) aufnimmt.

9. Absperrhahn (1) nach Anspruch 8, **dadurch gekennzeichnet, dass** die beiden Gehäuseteile (2.1,2.2) jeweils einen Anlageabschnitt (2.4) zur dichtenden Anlage des Absperrabschnitts (4.1) aufweisen und der Absperrkörper (4) über die Schaltwelle (5) um mindestens 180° von einer ersten Schließstellung, in der der Absperrabschnitt (4.1) am Anlageabschnitt (2.4) eines der Gehäuseteile (2.1,2.2) anliegt, in eine zweite Schließstellung, in der der Absperrabschnitt (4.1) am Anlageabschnitt (2.4) des anderen der Gehäuseteile (2.1,2.2) anliegt, drehbar ist.

10. Absperrhahn (1) nach einem der Ansprüche 2 bis 9, **dadurch gekennzeichnet, dass** die Hohlspindel (6) einen Abschnitt (6.6) aufweist, der an dem vom Absperrkörper (4) abgewandten Ende (5.2) der Schaltwelle (5) aus dieser hervorsteht, wobei insbesondere der Abschnitt (6.6) mit umlaufenden, im Querschnitt insbesondere zahnförmigen Vorsprüngen (6.7) versehen ist und/oder einen angeformten Sechskant (6.8) aufweist.

11. Absperrhahn (1) nach einem der Ansprüche 2 bis 10,
**dadurch gekennzeichnet, dass** die Hohlspindel (6) von mindestens zwei drehbar miteinander verbundenen Spindelteilen (6.9,6.10) gebildet ist.

12. Absperrhahn (1) nach einem der vorangehenden Ansprüche,
**dadurch gekennzeichnet, dass** ein Handgriff (8) drehfest mit der Schaltwelle (5), insbesondere ihrem vom Absperrkörper (4) wegweisenden Ende (5.2), verbunden ist, wobei insbesondere der Handgriff (8) den Abschnitt (6.6) der Hohlspindel (6), der aus der Schaltwelle (5) hervorsteht, radial umgibt.

13. Absperrhahn (1) nach Anspruch 12, **dadurch gekennzeichnet, dass** der Handgriff (8) eine abnehmbare Kappe (8.1) aufweist, die die Schaltwelle (5) und/oder die Hohlspindel (6) in axialer Richtung abdeckt.

14. Absperrhahn (1) nach einem der Ansprüche 2 bis 13,
**dadurch gekennzeichnet, dass** die Hohlspindel (6) von der zweiten Position, in der die Einlassöffnung (6.1) verschlossen ist, in die erste Position, in der der Entleerkanal (6.5) über die Einlassöffnung (6.1) mit dem Strömungsweg (S) in Fluidverbindung steht, in Richtung des Absperrkörpers (4) bewegt wird.

15. Verfahren zur Herstellung eines Absperrhahns (1) nach einem der vorangehenden Ansprüche, **dadurch gekennzeichnet, dass** die Schaltwelle (5) und die Hohlspindel (6) sowie auch der Handgriff (8) als bauliche Einheit vormontiert werden und zusammen in das Gehäuse (2) eingesetzt werden, wobei vorgesehen ist, dass die bauliche Einheit nach dem Einsetzen durch einen Sprengring gegen Ausblasen gesichert wird.

## Claims

1. A shut-off valve (1) for the installation field for shutting off a line through which a fluid can flow,
- with a housing (2) that has at least two connecting pieces (3), wherein a flow path (S) is defined from one of the connecting pieces (3) through the housing (2) to another one of the connecting pieces (3),
- with a shut-off body (4) that is rotatably arranged in the housing (2) and has at least one shut-off section (4.1) running transverse to the flow path (S), wherein the shut-off body (4) can be moved between a closed position, in which the flow path (S) is completely blocked, and an open position, in which the flow path (S) is completely unblocked, wherein in the closed position, the at least one shut-off section (4.1) at least partially blocks the flow path (S) toward one of the connecting pieces (3), and
- with a switching shaft (5) which is rotatably mounted in the housing (2) and which, at one of its ends (5.1), is connected to the shut-off body (4) in a rotationally fixed manner,
- with a hollow spindle (6) that is mounted in the switching shaft (5) formed as a hollow shaft, said hollow spindle having an inlet opening (6.1) at its end (6.2) facing toward the shut-off body (4), an outlet opening (6.3) at its end (6.4) facing away from the shut-off body (4), and a drainage channel (6.5) running from the inlet opening (6.1) to the outlet opening (6.3), wherein the hollow shaft (6) is displaceable relative to the switching shaft (5) from a first position, in which the drainage channel (6.5) is in fluid communication with the flow path (S) via the inlet opening (6.1), to a second position in which the inlet opening (6.1) is closed,
**characterized in**
- **that** the shut-off body (4) comprises only a single shut-off section (4.1), wherein in the closed position, the shut-off body (4) blocks the flow path (S) only toward one of the connecting pieces (3),
- **that** the single shut-off section (4.1) completely blocks the flow path (S), and
- **that** the single shut-off section (4.1) is designed as a spherical segment.

2. The shut-off valve (1) according to claim 1, **characterized in that** the hollow spindle (6) is formed by at least two spindle parts (6.9, 6.10) that are rotatably connected to each other.

3. The shut-off valve (1) according to claim 1 or 2, **characterized in that** the shut-off section (4.1) is designed as a segment of a hollow sphere or a solid sphere.

4. The shut-off valve (1) according to any one of the preceding claims, **characterized in that** the shut-off body (4) has a first connecting section (4.3) via which the shut-off section (4.1) is connected to the switching shaft (5) in a rotationally fixed manner.

5. The shut-off valve (1) according to any one of the preceding claims, **characterized in that** on its lower side (4.4) facing away from the switching shaft (5), the shut-off valve (4) is rotatably connected to the housing (2) via a bearing element (7), wherein the bearing element (7) is in particular a pin that is connected to the inside of the housing (2) and/or to the shut-off valve (4), and wherein in particular the shut-off body (4) has a second connecting section (4.5), via which the shut-off section (4.1) is connected to the bearing element (7) in a rotationally fixed manner.

6. The shut-off valve (1) according to any one of the claims 4 or 5, **characterized in that** the shut-off section (4.1) and the first and/or the second connecting sections (4.3, 4.5) are implemented as one piece.

7. The shut-off valve (1) according to any one of the preceding claims, **characterized in that** the shut-off body (4) is a formed sheet metal part that has in particular a uniform wall thickness.

8. The shut-off valve (1) according to any one of the preceding claims, **characterized in that** the housing (2) has a first housing part (2.1) that contains one of the connecting pieces (3), and a second housing part (2.2) that contains another one of the connecting pieces (3), wherein the two housing parts (2.1, 2.2) are directly connected to each other or via an intermediate piece (2.3), and wherein in particular the intermediate piece (2.3) or one of the housing parts (2.1, 2.2) receives the switching shaft (5).

9. The shut-off valve (1) according to claim 8, **characterized in that** the two housing parts (2.1, 2.2) each have a contact section (2.4) for sealingly contacting the shut-off section (4.1), and the shut-off body (4) is rotatable via the switching shaft (5) by at least 180° from a first closed position, in which the shut-off section (4.1) rests against the contact section (2.4) of one of the housing parts (2.1, 2.2), into a second closed position, in which the shut-off section (4.1) rests against the contact section (2.4) of the other one of the housing parts (2.1, 2.2).

10. The shut-off valve (1) according to any one of the claims 2 to 9, **characterized in that** the hollow spindle (6) has a section (6.6) that protrudes out of the switching shaft (5) at that end (5.2) thereof that faces away from the shut-off body (4), wherein in particular the section (6.6) is provided with circumferentially extending projections (6.7) that are in particular tooth-shaped in cross-section, and/or has a hexagon (6.8) molded thereon.

11. The shut-off valve (1) according to any one of the claims 2 to 10, **characterized in that** the hollow spindle (6) is formed by at least two spindle parts (6.9, 6.10) that are rotatably connected to each other.

12. The shut-off valve (1) according to any one of the preceding claims, **characterized in that** a handle (8) is connected in a rotationally fixed manner to the switching shaft (5), in particular to the end (5.2) thereof that faces away from the shut-off body (4), wherein in particular the handle (8) radially surrounds that section (6.6) of the hollow spindle (6) that protrudes out of the switching shaft (5).

13. The shut-off valve (1) according to claim 12, **characterized in that** the handle (8) has a removable cap (8.1) that covers the switching shaft (5) and/or the hollow spindle (6) in the axial direction.

14. The shut-off valve according to any one of the claims 2 to 13, **characterized in that** the hollow spindle (6) is moved in the direction of the shut-off body (4) from the second position, in which the inlet opening (6.1) is closed, into the first position, in which the drainage channel (6.5) is in fluid communication with the flow path (S) via the inlet opening (6.1).

15. A method for producing a shut-off valve (1) according to any one of the preceding claims, **characterized in that** the switching shaft (5) and the hollow spindle (6) and also the handle (8) are pre-assembled as a structural unit and are inserted together into the housing (2), wherein it is provided that after the insertion, the structural unit is secured by a circlip against blow-out.

## Revendications

1. Robinet d'isolement (1) pour le domaine des installations, pour l'isolement d'une conduite apte à être traversée par un fluide,
- avec un boîtier (2) comportant au moins deux tubulures de raccordement (3), dans lequel un trajet d'écoulement (S) s'étend de l'une des tubulures de raccordement (3) vers l'autre des tubulures de raccordement (3) en passant par le boîtier (2),
- avec un corps d'isolement (4) agencé de façon rotative dans le boîtier (2), avec au moins une section d'isolement (4.1) s'étendant transversalement au trajet d'écoulement (S), dans lequel le corps d'isolement (4) peut être déplacé entre une position de fermeture, dans laquelle le trajet d'écoulement (S) est entièrement bloqué, et une position d'ouverture, dans laquelle le trajet d'écoulement (S) est entièrement dégagé, dans lequel l'au moins une section d'isolement (4.1) bloque au moins partiellement le trajet d'écoulement (S) vers l'une des tubulures de raccordement (3) dans la position de fermeture, et
- avec un arbre de commutation (5) monté de façon rotative dans le boîtier (2), tout en étant lié rigide en rotation au corps d'isolement (4) par l'une de ses extrémités (5.1),
- avec une broche creuse (6) conçue comme un arbre creux et installée dans l'arbre de commutation (5), avec une ouverture d'admission (6.1) à son extrémité (6.2) tournée vers le corps d'isolement (4), une ouverture d'évacuation (6.3) à son extrémité (6.4) détournée du corps d'isolement (4), et un canal de décharge (6.5) s'étendant de l'ouverture d'admission (6.1) à l'ouverture d'évacuation (6.3), dans lequel la broche creuse (6) peut être déplacée par rapport à l'arbre de commutation (5), d'une première position, dans laquelle le canal de décharge (6.5) est en communication fluidique avec le trajet d'écoulement (S) par le biais de l'ouverture d'admission (6.1), vers une deuxième position, dans laquelle l'ouverture d'admission (6.1) est fermée,
**caractérisé en ce que**
- le corps d'isolement (4) ne comprend qu'une seule section d'isolement (4.1), dans lequel le corps d'isolement (4) ne bloque le trajet d'écoulement (S) que vers l'une des tubulures de raccordement (3) dans la position de fermeture,
- l'unique corps d'isolement (4) bloque entièrement le trajet d'écoulement (S), et
- l'unique section d'isolement (4.1) est conçue comme un segment sphérique.

2. Robinet d'isolement (1) selon la revendication 1, **caractérisé en ce que** la broche creuse (6) est formée par au moins deux parties de broche (6.9, 6.10) reliées entre elles de façon rotative.

3. Robinet d'arrêt (1) selon la revendication 1 ou 2, **caractérisé en ce que** la section d'isolement (4.1) est conçue comme un segment d'une bille creuse ou d'une bille pleine.

4. Robinet d'isolement (1) selon l'une des revendications précédentes, **caractérisé en ce que** le corps d'isolement (4) comporte une première section de liaison (4.3) par le biais de laquelle la section d'isolement (4.1) est liée rigide en rotation à l'arbre de commutation (5).

5. Robinet d'isolement (1) selon l'une des revendications précédentes, **caractérisé en ce que** le corps d'isolement (4) est lié en rotation au boîtier (2) par sa face inférieure (4.4) détournée de l'arbre de commutation (5), par le biais d'un élément de palier (7), dans lequel l'élément de palier (7) est en particulier un boulon relié au boîtier (2) du côté intérieur et/ou au corps d'isolement (4), et dans lequel le corps d'isolement (4) comporte en particulier une deuxième section de liaison (4.5) par le biais de laquelle la section d'isolement (4.1) est liée rigide en rotation à l'élément de palier (7).

6. Robinet d'isolement (1) selon l'une des revendications 4 ou 5, **caractérisé en ce que** la section d'isolement (4.1) et la première et/ou la deuxième section de liaison (4.3, 4.5) sont conçues en une seule pièce.

7. Robinet d'isolement (1) selon l'une des revendications précédentes, **caractérisé en ce que** le corps d'isolement (4) est une pièce de formage possédant en particulier une épaisseur de paroi uniforme.

8. Robinet d'isolement (1) selon l'une des revendications précédentes, **caractérisé en ce que** le boîtier (2) comporte une première pièce de boîtier (2.1) contenant l'une des tubulures de raccordement (3) et une deuxième pièce de boîtier (2.2) contenant l'autre des tubulures de raccordement (3), dans lequel les deux pièces de boîtier (2.1, 2.2) sont reliées entre elles directement ou par le biais d'une pièce intermédiaire (2.3), et dans lequel la pièce intermédiaire (2.3) ou l'une des pièces de boîtier (2.1, 2.2) en particulier reçoit l'arbre de commutation (5).

9. Robinet d'isolement (1) selon la revendication 8, **caractérisé en ce que** les deux pièces de boîtier (2.1, 2.2) comportent chacune une section d'application (2.4) pour une application serrée de la section d'isolement (4.1), et **en ce que** le corps d'isolement (4) peut tourner d'au moins 180° par le biais de l'arbre de commutation (5), d'une première position de fermeture, dans laquelle la section d'isolement (4.1) est appliquée sur la section d'application (2.4) de l'une des pièces de boîtier (2.1, 2.2), vers une deuxième position de fermeture, dans laquelle la section d'isolement (4.1) est appliquée sur la section d'application (2.4) de l'autre des pièces de boîtier (2.1, 2.2).

10. Robinet d'isolement (1) selon l'une des revendications 2 à 9, **caractérisé en ce que** la broche creuse (6) comporte une section (6.6) faisant saillie hors de l'arbre de commutation (5), à l'extrémité (5.2) de celui-ci qui est détournée du corps d'isolement (4), dans lequel la section (6.6) est en particulier pourvue de saillies (6.7) périphériques présentant en particulier une section transversale en forme de dents, et/ou comporte un six pans (6.8) rapporté.

11. Robinet d'isolement (1) selon l'une des revendications 2 à 10, **caractérisé en ce que** la broche creuse (6) est formée par au moins deux pièces de broche (6.9, 6.10) reliées entre elles de façon rotative.

12. Robinet d'isolement (1) selon l'une des revendications précédentes, **caractérisé en ce qu'**une poignée (8) est liée rigide en rotation à l'arbre de commutation (5), en particulier à son extrémité (5.2) détournée du corps d'isolement (4), dans lequel la poignée (8) entoure en particulier la section (6.6) de la broche creuse (6) qui fait saillie hors de l'arbre de commutation (5).

13. Robinet d'isolement (1) selon la revendication 12, **caractérisé en ce que** la poignée (8) comporte un capuchon amovible (8.1) recouvrant l'arbre de commutation (5) et/ou la broche creuse (6) dans la direction axiale.

14. Robinet d'isolement (1) selon l'une des revendications 2 à 13, **caractérisé en ce que** la broche creuse (6) est déplacée en direction du corps d'isolement (4), de la deuxième position, dans laquelle l'ouverture d'admission (6.1) est fermée, vers la première position, dans laquelle le canal de décharge (6.5) est en communication fluidique avec le trajet d'écoulement (S) par le biais de l'ouverture d'admission (6.1).

15. Procédé pour la fabrication d'un robinet d'isolement (1) selon l'une des revendications précédentes, **caractérisé en ce que** l'arbre de commutation (5) et la broche creuse (6) ainsi que la poignée (8) sont pré-montés en un bloc de construction et installés ensemble dans le boîtier (2), dans lequel il est prévu que le bloc de construction soit protégé contre l'éjection par une bague élastique suite à l'installation.
